# EUROPEAN PATENT APPLICATION

(11) **EP 4 759 567 A1**
(43) Date of publication of application: **17.06.2026**
(21) Application number: 25222641.0
(22) Date of filing: 11.12.2025
(51) Int. Cl.: B60C 23/00, B60G 17/052, B62D 35/00, B60C 3/00, B60C 23/16, B60G 11/27

(54) **MOTOR VEHICLE**

(30) Priority: 12.12.2024 IT 202400028326
(71) Applicant: FERRARI S.p.A., 41100 Modena (IT)
(72) Inventor: SANCHEZ GOMEZ, Isaac Joaquin, 41100 MODENA (IT); ANNEQUIN-DIGOND, Thierry, 41100 MODENA (IT); BALLATORE, Marco, 41100 MODENA (IT); TANCREDI, Fabio, 41100 MODENA (IT)
(74) Representative: Studio Torta S.p.A.

(57) **Abstract**

A motor vehicle (1; 1'; 1"; 1'''; 1ʺʺ; 1‴ʺ; 1‴‴; 1‴ʺʺ) comprising a frame (2), a plurality of the wheels (3; 3‴; 3ʺʺ; 3‴ʺ; 3‴‴; 3‴ʺʺ) rotatable relative to the frame (2) about respective rotational axes (A) is described. Each wheel (3; 3‴; 3ʺʺ; 3‴ʺ; 3‴‴; 3‴ʺʺ) comprises a rim (4; 4‴ʺʺ) arranged concentrically to the respective rotational axis (A) and at least one tyre (5; 5a‴ʺʺ, 5b‴ʺʺ) mounted around the rim (4; 4‴ʺʺ). The tyre (5; 5a‴ʺʺ, 5b‴ʺʺ) comprises, in turn, a radially external surface (6; 6a‴ʺʺ, 6b‴ʺʺ) with respect to the respective rotational axis (A) and a volume (7; 7‴; 7ʺʺ; 7‴ʺ; 7‴‴; 7a‴ʺʺ, 7b‴ʺʺ) interposed between the radially external surface (6; 6a‴ʺʺ, 6b‴ʺʺ) and the rim (4; 4‴ʺʺ) radially with respect to the rotational axis (A). The motor vehicle (1; 1'; 1"; 1‴; 1ʺʺ; 1‴ʺ; 1‴‴; 1‴ʺʺ) comprises at least one additional volume (8; 8a', 8b'; 8''; 8‴; 8ʺʺ; 8‴ʺ; 8‴‴; 8‴ʺʺ), which is fluidly connected to the volume (7; 7‴; 7ʺʺ; 7‴ʺ; 7‴‴; 7a‴ʺʺ, 7b‴ʺʺ) of at least one wheel (3; 3‴; 3ʺʺ; 3‴ʺ; 3‴‴; 3‴ʺʺ).

## Description

### CROSS-REFERENCE TO RELATED APPLICATIONS

This patent application claims priority from Italian patent application no. 102024000028326 filed on December 12, 2024, the content of which is incorporated herein by reference.

### FIELD OF THE ART

The invention relates to a motor vehicle. In particular, the invention relates to the field of adjusting the inflation pressure of the tyres of a motor vehicle.

### CONTEXT

Motor vehicles essentially comprising a frame and a plurality of the wheels rotatable relative to the frame about respective rotational axes are known.

Each wheel comprises a rim and a tyre fitted around the rim, which is adapted to roll in contact with the road surface. At least some categories of tyres are inflated, in a known manner, with a certain amount of gas under pressure.

During motion, the tyres are subject to rolling resistance, which depends on several factors, including inflation pressure. In general, higher inflation pressure values correspond to lower rolling resistance values and vice versa.

Rolling resistance causes the dispersion of energy in the form of heat.

In particular, it was observed that the impact that rolling resistance has on the energy consumption of the motor vehicles can be significant and is of particular relevance in electric motor vehicles, for which autonomy is an aspect of primary importance.

At the same time, for safety reasons, it is fundamental that the tyres ensure adequate grip to the road surface. This is especially true when the motor vehicle is cornering or during braking.

It is therefore necessary that the tyres are subjected to an at least sufficient rolling resistance to ensure road grip.

In light of the above, the need to be able to safely vary the rolling resistance of the tyres depending on the different driving conditions is felt.

An aim of the invention is to meet the need set out above, preferably in a simple and economical manner.

### DISCLOSURE OF THE INVENTION

The aim is achieved by a motor vehicle as defined in claim 1.

The aim is also achieved by a method to adjust, control and/or vary the inflation pressure of at least one tyre of a motor vehicle as defined in claim 13.

The dependent claims define particular embodiments of the invention.

### BRIEF DESCRIPTION OF THE DRAWINGS

In the following, eight embodiments of the invention are described for a better understanding thereof by way of non-limiting examples and with reference to the accompanying drawings, in which:
- Figure 1A is a schematic view from below of a motor vehicle according to a first embodiment of the present invention;
- Figure 1B is a side and schematic view of the motor vehicle of Figure 1A, with parts removed for clarity;
- Figure 1C schematically shows the contact area against the ground of the tyres of the motor vehicle of Figures 1A and 1B in two different operating conditions;
- Figure 1D is a schematic view from below of a motor vehicle according to a second embodiment of the present invention;
- Figure 1E is a side and schematic view of the motor vehicle of Figure 1D, with parts removed for clarity;
- Figure 2 is a schematic view from below of a motor vehicle according to a third embodiment of the present invention;
- Figure 3A is a sectional view of a portion of a motor vehicle according to a fourth embodiment of the present invention, with parts removed for clarity;
- Figure 3B is a sectional view of a portion of a motor vehicle according to a fifth embodiment of the present invention, with parts removed for clarity;
- Figure 4A is a side view of a motor vehicle according to a sixth embodiment of the present invention comprising an aerodynamic element in a first operating configuration;
- Figure 4B is a side and partial view of the motor vehicle of Figure 4A showing the aerodynamic element in a second operating configuration;
- Figure 4C is a side view of a motor vehicle according to a seventh embodiment of the present invention comprising an aerodynamic element in a first operating configuration;
- Figure 4D is a side and partial view of the motor vehicle of Figure 4C showing the aerodynamic element in a second operating configuration;
- Figure 5A is a perspective view of a wheel of a motor vehicle according to an eighth embodiment of the present invention; and
- Figure 5B is a sectional and schematic view of the wheel of Figure 5A.

### EMBODIMENTS OF THE INVENTION.

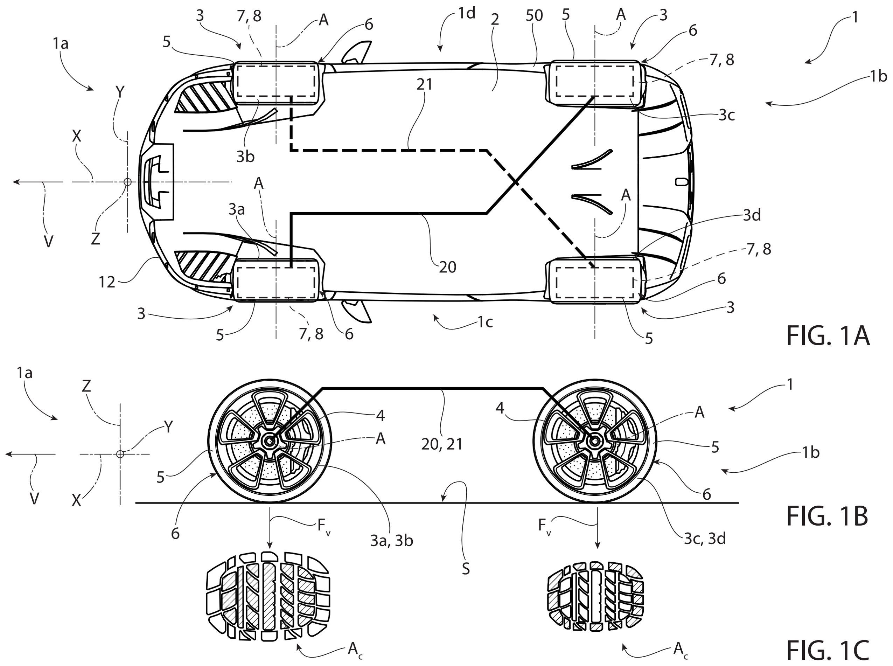

In Figures 1A and 1B, reference numeral 1 is used to denote, as a whole, a motor vehicle according to a first embodiment of the present invention.

Preferably but not necessarily, the motor vehicle 1 is an electric or hybrid vehicle.

In a known way, it is possible to associate to the motor vehicle 1 an integral reference system comprising:
- a direction X of longitudinal extension;
- a direction Z vertical to the ground S on which the motor vehicle 1 rests and directed perpendicularly to the direction X; and
- a direction Y orthogonal to the directions X and Z.

The motor vehicle 1 also comprises a front portion 1a and a rear portion 1b with respect to an advancement direction V. In detail, the front portion 1a and the rear portion 1b are opposed to each other along the direction X.

The motor vehicle 1 also comprises a left lateral portion 1c and a right lateral portion 1d with respect to the advancement direction V. The left and right lateral portions 1c, 1d extend between the front portion 1a and the rear portion 1b along the direction X. In addition, the left and right lateral portions 1c, 1d are opposed to each other parallel to the direction Y.

The motor vehicle 1 also comprises a frame 2 and a plurality of wheels - generally denoted by reference numeral 3 - rotatable relative to the frame 2 about respective rotational axes A.

The motor vehicle 1 also comprises a bodywork 12, which constitutes its external covering and is operatively connected to the frame 2. The bodywork 12 comprises, in turn, a plurality of bodies 50 - for example, panels - fixed or movable with respect to the frame 2 and suitably shaped to define the aerodynamic profile of the motor vehicle 1.

In the following, unless otherwise indicated, reference will be made to a single wheel 3, all wheels 3 being identical to each other.

The wheel 3 comprises, in a known manner, a rim 4 arranged concentrically to the rotational axis A and a tyre 5 mounted around the rim 4.

The tyre 5 comprises, in turn, a radially external surface 6 with respect to the rotational axis A and a volume 7 interposed between the radially external surface 6 and the rim 4 radially with respect to the rotational axis A. In other words, the volume 7 is an internal volume of the wheel 3.

The volume 7 is adapted to contain, in a known manner, a certain amount of gas (for example, air or a mixture of air and nitrogen) at a certain inflation pressure.

The radially external surface 6 is adapted to roll in contact with the ground S. In further detail, the radially external surface 6 is the tread of the tyre 5.

For example, the tyre 5 is of the *tubeless* type. Alternatively, the tyre 5 comprises an inner tube. In this case, the volume 7 comprises and/or defines the inner tube.

In the embodiment shown in Figure 1A, the motor vehicle 1 comprises four wheels 3a, 3b, 3c, 3d. In detail, the wheels 3a and 3b are both arranged on the side of the front portion 1a; the wheels 3c and 3d are both arranged on the side of the rear portion 1b. In addition, the wheels 3a and 3d are arranged on the side of the left lateral portion 1c and the wheels 3b and 3c are arranged on the side of the right lateral portion 1d.

As schematically shown in Figure 1B, the wheels 3a, 3b, 3c, 3d, during operation, are subjected to vertical loads Fᵥ, i.e. forces acting parallel to the direction Z, which are generally variable and different from each other.

As schematically shown in Figure 1C, each wheel 3a, 3b, 3c, 3d defines a contact area Ac with the ground S. The extension of such contact area Ac depends on various factors, including tyre inflation pressure and the extent of the vertical loads Fᵥ.

In detail, Figure 1C shows the contact areas Ac of the wheels 3b and 3d during braking, both in a theoretical condition in which the wheels 3b and 3c are fluidly isolated from each other (note the footprint with hatched area), and in a condition in which the wheels 3b and 3c can exchange gases with each other (note the footprint without hatching). In more detail, the contact areas Ac in the two conditions are superimposed on each other for ease of representation.

Advantageously, the motor vehicle 1 comprises at least one further volume 8, which is fluidly connected to the volume 7 of at least one wheel 3a, 3b, 3c, 3d.

The volume 8 is adapted to exchange gas mass with the volume 7 of the wheel(s) 3a, 3b, 3c, 3d to which it is fluidly connected as a function of the load conditions of the wheels.

In detail, the volume 7 of the wheel 3a is fluidly connected to the volume 7 of the wheel 3c. Consequently, the volume 7 of the wheel 3c is to be understood as a further volume 8 for the wheel 3a and vice versa.

Similarly, the volume 7 of the wheel 3b is fluidly connected to the volume 7 of the wheel 3d. Consequently, the volume 7 of the wheel 3d is to be understood as a further volume 8 for the wheel 3b and vice versa.

In detail, the motor vehicle 1 comprises (Figure 1A):
- a fluidic line 20 which fluidically connects the volumes 7 of the wheels 3a and 3c to each other; and
- a fluidic line 21 which fluidically connects the volumes 7 of the wheels 3b and 3d to each other.

In further detail, the fluidic line 20 and the fluidic line 21 are fluidly isolated from each other.

The operation of the motor vehicle 1 is described below.

In use, the wheels 3 roll, determining the displacement of the motor vehicle 1 with respect to the ground S. During the travel of the motor vehicle 1, the wheels 3a, 3b, 3c, 3d are subjected to vertical loads Fᵥ that are generally different from each other.

Since the volumes 7 of the wheels 3a and 3c are fluidly connected to each other and the volumes 7 of the wheels 3b and 3d are also fluidly connected to each other, due to any vertical load differences Fᵥ, the gas contained in the volume 7 of the more compressed wheels tends to move towards the volume 7 of the less compressed wheels.

By way of example, during braking (see Figure 1B), the wheels 3a and 3b are subjected to vertical loads Fᵥ greater than those acting on wheels 3c and 3d. Consequently, a certain amount of gas contained in the wheel 3a moves in the wheel 3c through the fluidic line 20 and a certain amount of gas contained in the wheel 3b moves in the wheel 3d through the fluidic line 21.

Since the inflation pressure of the wheels 3a and 3b decreases as a result of the transfer of gas towards the wheels 3c and 3d, the contact area Ac of the wheels 3a and 3b increases, resulting in an increase in the grip of the wheels 3a and 3b to the ground S. At the same time, the contact area Ac of the wheels 3c and 3d decreases (see the footprints without hatching in Figure 1C).

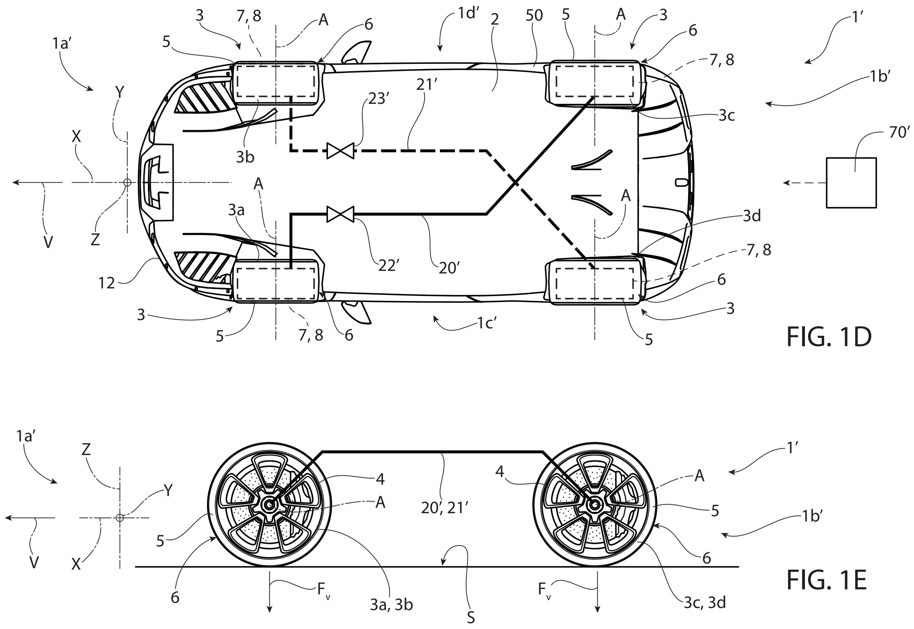

With reference to Figures 1D and 1E, 1' denotes a motor vehicle according to a second embodiment of the present invention. The motor vehicle 1' is similar to the motor vehicle 1 and will be described below only insofar as it differs from the latter; equal or equivalent parts of the motor vehicles 1; 1' will be marked, where possible, by the same reference numerals.

The motor vehicle 1' differs from the motor vehicle 1 in that it comprises:
- valve means 22', which selectively deny the fluidic communication between the volumes 7 of the wheels 3a and 3c; and
- valve means 23', which selectively deny the fluidic communication between the volumes 7 of the wheels 3b and 3d.

As shown in Figure 1D, the valve means 22' are arranged at the fluidic line 20' and the valve means 23' are arranged at the fluidic line 21'.

The motor vehicle 1' further comprises an electronic control unit 70' operatively connected to the valve means 22' and the valve means 23' and configured to command the valve means 22' and/or the valve means 23' to deny or allow the fluidic communication between the volumes 7 of the respective wheels 3a, 3b, 3c, 3d as a function of a control criterion.

In detail, the control criterion provides that one or more parameters (e.g., speed, acceleration, steering angle, driving torque, the vertical loads Fᵥ and/or tyre pressure 5, etc.) of the dynamics of the motor vehicle 1' are less than or greater than a threshold value.

For example, the electronic control unit 70' is configured to command the valve means 22' and/or the valve means 23' to allow or deny the fluidic communication between the volumes 7 of the respective wheels 3a, 3b, 3c, 3d when it is determined and/or detected that the motor vehicle 1' travels along a curve.

Alternatively or in addition, the electronic control unit 70' is configured to command the valve means 22' and/or the valve means 23' to deny the fluidic communication between the volumes 7 of the respective wheels 3a, 3b, 3c, 3d when a puncture of one of the tyres 5 occurs.

In particular, the valve means 22', 23' comprise respective solenoid valves.

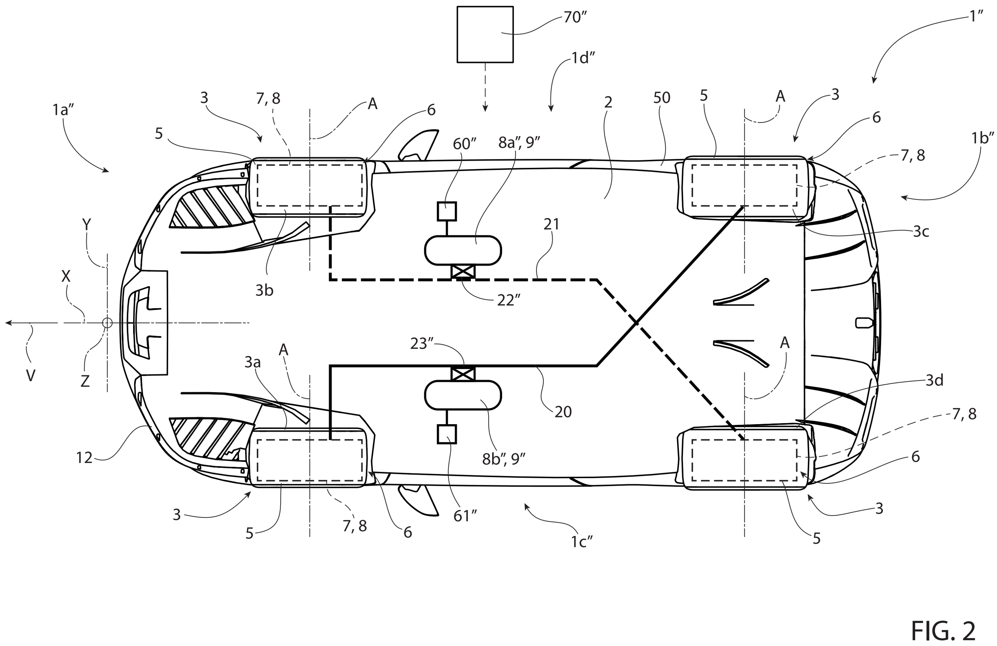

With reference to Figure 2, 1'' denotes a motor vehicle according to a third embodiment of the present invention. The motor vehicle 1'' is similar to the motor vehicle 1 and will be described below only insofar as it differs from the latter; equal or equivalent parts of the motor vehicles 1; 1'' will be marked, where possible, by the same reference numerals.

The motor vehicle 1" differs from the motor vehicle 1 in that it comprises two tanks 9'', which are fluidly connected respectively to the fluidic line 20 and to the line 21.

Advantageously, each of the two tanks 9'' comprises a respective further volume 8a'', 8b".

In particular, the volume 8b'' is fluidly connected to the fluidic line 20 and is therefore fluidly connected to the wheels 3a and 3c; the volume 8a'' is fluidly connected to the fluidic line 21 and is therefore fluidly connected to the wheels 3b and 3d.

The motor vehicle 1'' further comprises:
- valve means 22'', which selectively deny the fluidic communication between the volume 8a'' and the fluidic line 21; and
- valve means 23'', which selectively deny the fluidic communication between the volume 8b' and the fluidic line 20.

In detail, the valve means 22'' and 23'' comprise respective solenoid valves.

The motor vehicle 1'' also comprises:
- a compressor 60'', which is fluidly connected to the volume 8a'' and is configured to deliver gas under pressure to said volume 8a'';
- a compressor 61'', which is fluidly connected to the volume 8b'' and is configured to deliver gas under pressure to said volume 8b''; and
- an electronic control unit 70'', which is operatively connected to the valve means 22'', 23'' and the compressors 60" , 61".

The electronic control unit 70'' is configured to:
- command the valve means 22'' to deny the fluidic communication between the volume 8a'' and the fluidic line 21 and subsequently command the compressor 60'' to deliver gas under pressure to the volume 8a'';
- command the valve means 23" to deny the fluidic communication between the volume 8b'' and the fluidic line 20 and subsequently command the compressor 61'' to deliver gas under pressure to the volume 8b".

In detail, the electronic control unit 70'' is configured to command the compressor 60'' to deliver gas under pressure to the volume 8a'' as long as a pressure in the volume 8a'' meets a control criterion; similarly, the electronic control unit 70" is configured to command the compressor 61'' to deliver gas under pressure to the volume 8b'' as long as the pressure within the volume 8b'' meets a control criterion.

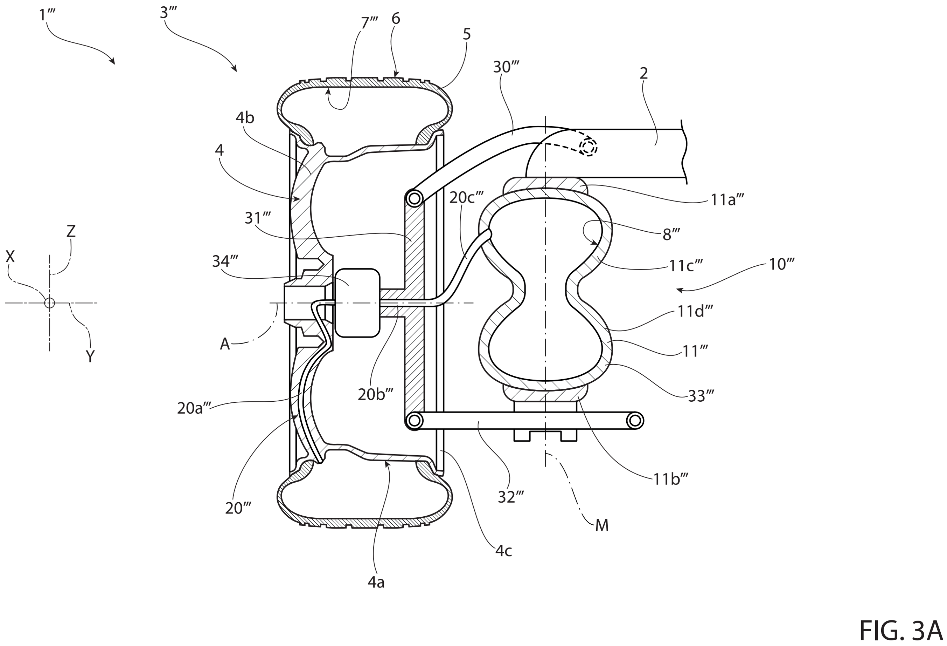

With reference to Figure 3A, 1''' denotes a motor vehicle according to a fourth embodiment of the present invention. The motor vehicle 1''' is similar to the motor vehicle 1 and will be described below only insofar as it differs from the latter; equal or equivalent parts of the motor vehicles 1; 1‴ will be marked, where possible, by the same reference numerals.

The motor vehicle 1‴ differs from the motor vehicle 1 in that it comprises a plurality of suspensions 10‴, each comprising at least one gas spring 11‴. In a known manner, the suspensions 10‴ operatively connect the frame 2 to the wheels 3''' at variable relative distances.

Advantageously, each gas spring 11‴ comprises a volume 8''', which is fluidly connected to one or more wheels 3‴. Therefore, the volume 8‴ is adapted to contain the same gas or the same mixture of gas contained in the volume 7‴ of the wheels 3'''.

Figure 3A shows, by way of non-limiting example, a suspension 10‴ of the double swing arm type. In detail, the suspension 10" comprises:
- a swing arm 30‴, which is hinged to the frame 2 and to a wheel hub 31''' of the wheel 3‴;
- a swing arm 32‴ spaced from the swing arm 30‴ parallel to the direction Z and also hinged to the wheel hub 31‴; and
- the gas spring 11‴, which comprises two ends 11a‴ and 11b‴ opposed to each other parallel to the direction Z, of which one (11a‴) is fixed to the frame 2 and the other (11b‴) is fixed to the swing arm 32‴.

In detail, the gas spring 11‴ comprises a bellows 33''' made of deformable material and defining the volume 8‴.

In further detail, the gas spring 11‴ extends mainly along a direction M parallel or substantially parallel to the direction Z.

In the non-limiting form shown, the gas spring 11‴ has an hourglass shape. In particular, proceeding from the end 11a‴ to the end 11b‴ along the direction M, the gas spring 11‴ comprises two half-portions 11c‴ and 11d‴. Specifically, proceeding from the end 11a‴ to the end 11b‴, the extension of the half-portion 11c‴ parallel to the direction Y progressively increases and then progressively decreases; the extension of the half-portion 11d" ' parallel to the direction Y progressively increases and then progressively decreases.

In particular, the motor vehicle 1''' comprises four wheels 3‴, to each of which a respective gas spring 11‴ is fluidly connected.

Alternatively, the motor vehicle 1''' comprises only two wheels 3''', to each of which a respective gas spring 11‴ is fluidly connected. For example, the two wheels 3‴ are arranged on the side of the front portion of the motor vehicle 1''' or are both arranged on the side of the rear portion of the motor vehicle 1‴. The other two wheels of the motor vehicle 1''' are instead not fluidly connected to any gas springs 11‴.

The motor vehicle 1‴ also comprises a fluidic line 20‴, which fluidly connects the volume 7''' of the wheel 3‴ to the volume 8''' of the gas spring 11‴.

The fluidic line 20‴ comprises:
- a segment 20a''', which extends between the volume 7‴ and the wheel hub 31‴;
- a segment 20b‴, which extends inside the wheel hub 31‴; and
- a segment 20c‴, which extends between the wheel hub 31‴ and the volume 8‴.

In detail, the segment 20a‴ extends at least partially inside the rim 4. In addition, preferably but not necessarily, the segment 20a''' extends partially through or in proximity to a bearing 34ʺʺ of the wheel 3‴.

The segment 20b‴ is directed parallel to the rotational axis A for at least part of its length.

The segment 20c''' is made of a flexible material.

In a known manner, the rim 4 comprises:
- a radially external surface 4a extending along the entire circumference of the rim 4 itself with respect to the rotational axis A and around which the tyre 5 is fitted;
- a portion 4b, which is transverse to the surface 4a and radially internal to the surface 4a with respect to the rotational axis A; and
- a portion 4c, also transversal to the surface 4a and radially internal to the surface 4a with respect to the rotational axis A.

The portions 4b and 4c are spaced from each other parallel to the rotational axis A. In addition, the portion 4b faces outward of the motor vehicle 1‴ (i.e., on the side facing away from the other wheel 3" aligned along the direction Y) and the portion 4c faces inward of the motor vehicle 1‴(i.e., toward the other wheel 3‴aligned along the direction Y). Specifically, the portion 4c faces the gas spring 11ʺʺ of the wheel 3‴.

In particular, the segment 20a''' extends at least partially through the portion 4b.

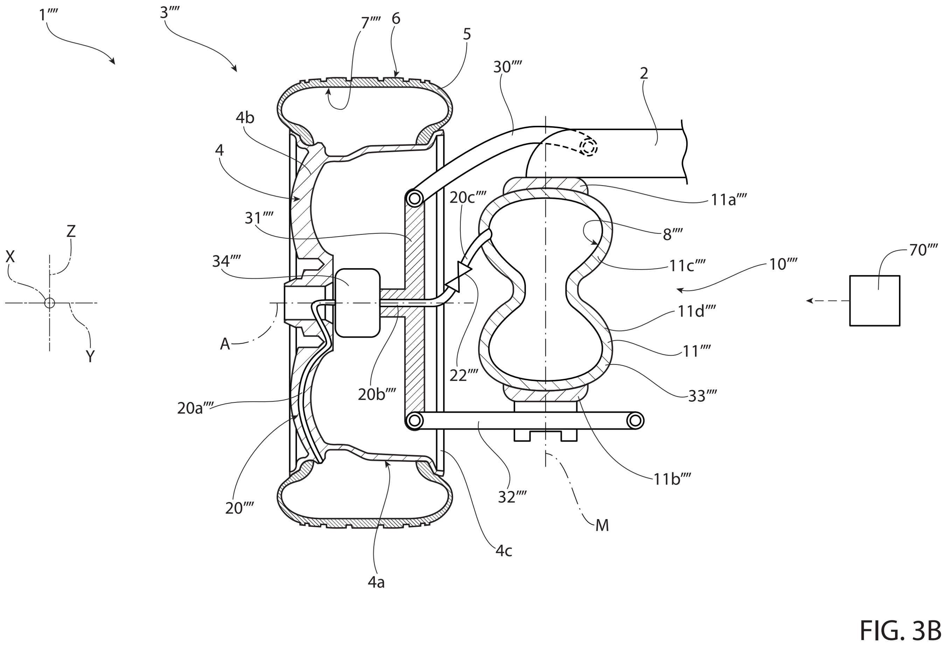

With reference to Figure 3B, 1ʺʺ denotes a motor vehicle according to a fifth embodiment of the present invention. The motor vehicle 1"" is similar to the motor vehicle 1‴ and will be described below only insofar as it differs from the latter; equal or equivalent parts of the motor vehicles 1‴; 1ʺʺ will be marked, where possible, by the same reference numerals.

The motor vehicle 1ʺʺ differs from the motor vehicle 1‴ in that it comprises:
- valve means 22ʺʺ adapted to selectively deny the fluidic communication between the volume 7ʺʺ and the volume 8ʺʺ;
- an electronic control unit 70ʺʺ operatively connected to the valve means 22ʺʺ and configured to command the valve means 22ʺʺ to allow or deny the passage of gas under pressure from the volume 7ʺʺ to the volume 8ʺʺ.

The electronic control unit 70ʺʺ is configured to command the valve means 22ʺʺ to deny or allow the fluidic communication between the volume 7ʺʺ and the volume 8ʺʺ as a function of a control criterion.

In detail, the control criterion provides that one or more parameters (e.g., speed, acceleration, steering angle, driving torque, the vertical loads Fᵥ and/or tyre pressure 5, etc.) of the dynamics of the motor vehicle 1'''' are less than or greater than a threshold value.

For example, the electronic control unit 70ʺʺ is configured to command the valve means **22ʺʺ** to allow the passage of gas under pressure from the volume 7ʺʺ to the volume 8 ʺʺ when a vertical load Fᵥ having a modulus greater than a threshold value is applied or it is envisaged to be applied to the wheel 3ʺʺ.

In the non-limiting embodiment shown in Figure 3B, the valve means 22ʺʺ are arranged at the segment 20cʺʺ. However, the valve means 22ʺʺ could be arranged at the segment 20aʺʺ or the segment 20bʺʺ.

In particular, the valve means 22ʺʺ comprise a solenoid valve.

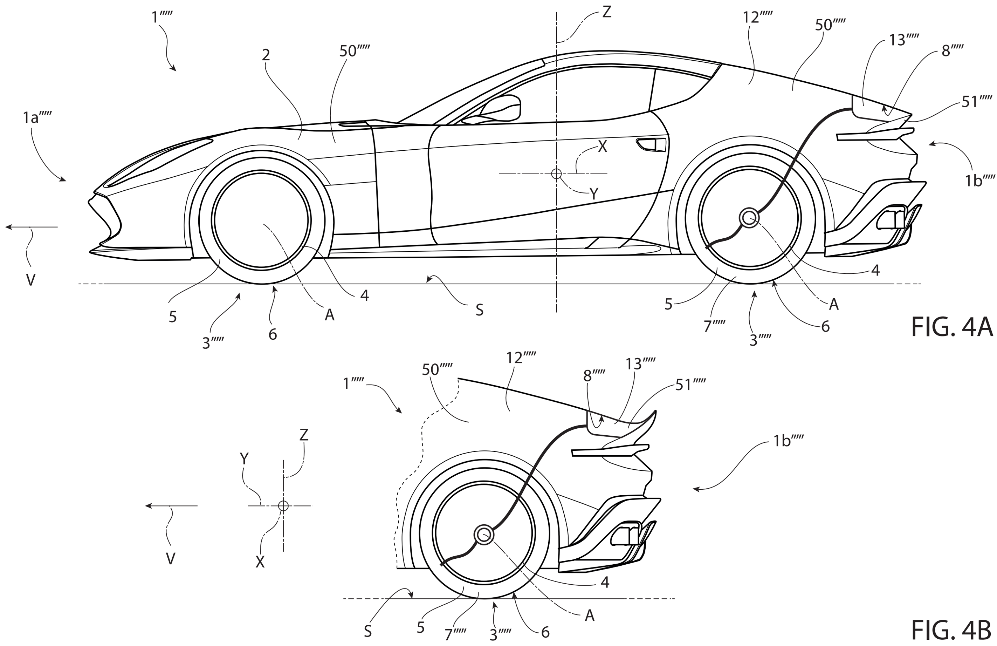

With reference to Figures 4A and 4B, 1''''' denotes a motor vehicle according to a sixth embodiment of the present invention. The motor vehicle 1ʺʺ is similar to the motor vehicle 1 and will be described below only insofar as it differs from the latter; equal or equivalent parts of the motor vehicles 1; 1‴ʺ will be marked, where possible, by the same reference numerals.

The motor vehicle 1‴ʺ differs from the motor vehicle 1 in that it comprises a bodywork 12‴ʺ instead of the bodywork 12.

The bodywork 12‴ʺ is similar to the bodywork 12 and will be described below insofar as it differs from the latter; equal or equivalent parts of the bodywork 12; 12‴ʺ will be marked, where possible, by the same reference numerals.

The bodywork 12‴ʺ differs from the bodywork 12 in that it comprises a deformable aerodynamic device 13‴ʺ.

Advantageously, the aerodynamic device 13‴ʺ comprises a volume 8‴ʺ, which is inflatable and fluidly connected to the volume 7‴ʺ of at least some of the wheels 3‴ʺ.

In the embodiment shown in Figures 4A and 4B, the aerodynamic device 13''''' is a spoiler.

The aerodynamic device 13‴ʺ is selectively positionable in an undeformed configuration (Figure 4A) or in a deformed configuration (Figure 4B).

In detail, when the aerodynamic device 13''''' is in the undeformed configuration, it can be associated with a first aerodynamic drag value; when the aerodynamic device 13‴ʺ is in the deformed configuration, it can be associated with a second aerodynamic drag value greater than the first value.

The aerodynamic device 13‴ʺ comprises a deformable body 51‴ʺ, which defines the volume 8‴ʺ or is in contact with the volume 8‴ʺ. In detail, the deformable body 51‴ʺ is adapted to deform as a function of the level of inflation of the volume 8‴ʺ**.**

At the same time, the deformable body 51‴ʺ performs the function of a body 50‴ʺ of the bodywork 12‴ʺ.

Preferably but not necessarily, the aerodynamic device 13‴ʺ is shaped and/or configured as described in Italian patent application IT102024000016345, filed on July, 15 2024 in the name of the same Applicant, the disclosure of which is incorporated herein by reference.

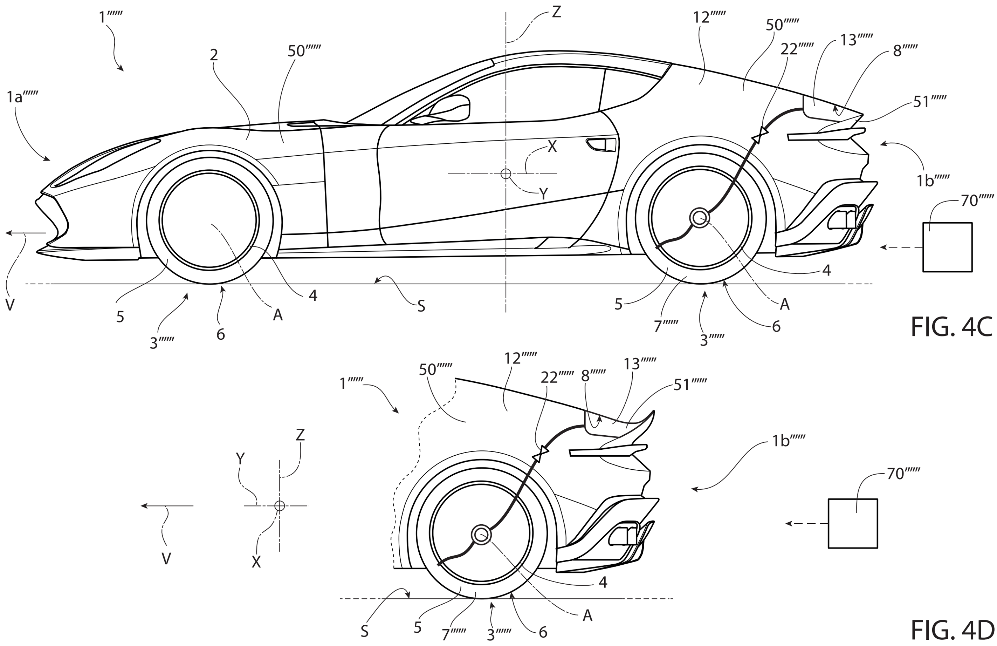

With reference to Figures 4C and 4D, 1‴‴ denotes a motor vehicle according to a seventh embodiment of the present invention. The motor vehicle 1‴‴ is similar to the motor vehicle 1‴‴ and will be described below only insofar as it differs from the latter; equal or equivalent parts of the motor vehicles 1‴ʺ; 1‴‴ will be marked, where possible, by the same reference numerals.

The motor vehicle 1ʺʺ differs from the motor vehicle 1‴ʺ in that it comprises:
- valve means 22‴ʺ adapted to selectively deny the fluidic communication between the volume 7‴‴ and the volume 8‴‴;
- an electronic control unit 70‴‴ operatively connected to the valve means 22‴‴ and configured to command the valve means 22‴‴ to allow or deny the passage of gas under pressure from the volume 7‴‴ to the volume 8‴‴.

The electronic control unit 70‴‴ is configured to command the valve means 22‴‴ to deny or allow the fluidic communication between the volume 7‴‴ and the volume 8‴‴ as a function of a control criterion.

In detail, the control criterion provides that one or more parameters (e.g., speed, acceleration, steering angle, driving torque, the vertical loads Fᵥ and/or tyre pressure 5, etc.) of the dynamics of the motor vehicle 1‴‴ are less than or greater than a threshold value.

For example, the electronic control unit 70‴‴ is configured to command the valve means 22‴‴ to allow or deny the fluidic communication between the volumes 7‴‴ and 8‴‴ when the aerodynamic drag or vertical loads Fᵥ acting on the motor vehicle 1‴‴ are greater than or less than a threshold value.

Specifically, the electronic control unit 70‴‴ is configured to command the valve means 22‴‴ to allow the fluidic communication between the volumes 7‴‴ and 8‴‴ when it is desired to obtain a downforce by means of the aerodynamic device 13‴‴ (for example, when the motor vehicle 1‴ʺʺ travels along a curve).

Alternatively or in addition, the electronic control unit 70‴‴ is configured to command the valve means 22‴‴ to deny the passage of gas under pressure from the volume 7‴‴ to the volume 8‴‴ when it is desired to reduce the aerodynamic drag of the motor vehicle 1‴‴.

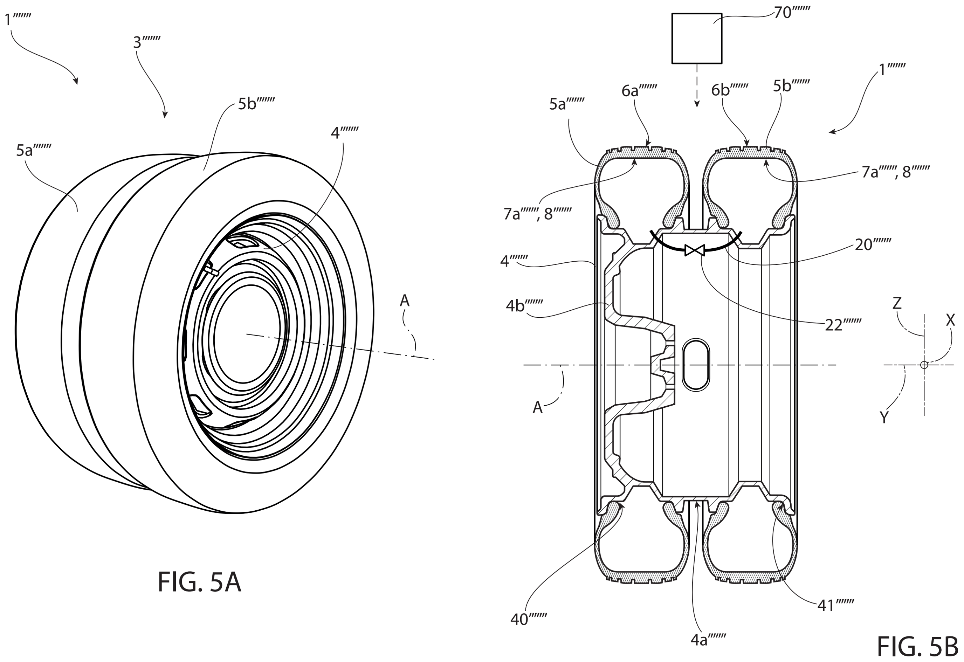

With reference to Figures 5A and 5B, 1ʺʺ‴ denotes a motor vehicle according to an eighth embodiment of the present invention. The motor vehicle 1‴ʺʺ is similar to the motor vehicle 1 and will be described below only insofar as it differs from the latter; equal or equivalent parts of the motor vehicles 1; 1‴ʺʺ will be marked, where possible, by the same reference numerals.

The motor vehicle 1‴ʺʺ differs from the motor vehicle 1 in that it comprises at least one wheel 3‴ʺʺ (Figures 5A and 5B) instead of the wheel 3.

The wheel 3‴ʺʺ is similar to the wheel 3 and will be described below insofar as it differs from the latter; equal or equivalent parts of the wheels 3; 3‴ʺʺ will be marked, where possible, by the same reference numerals.

In the following, reference will be made to a single wheel 3‴ʺʺ, all wheels 3‴ʺʺ being identical to each other.

The wheel 3‴ʺʺ differs from the wheel 3 in that it comprises a tyre 5a‴ʺʺ and a tyre 5b‴ʺʺ mounted around the same rim 4‴ʺʺ. In other words, the wheel **3‴ʺʺ** is a twin wheel.

The tyres 5a‴ʺʺ and 5b‴ʺʺ are adjacent to each other parallel to the rotational axis A. In detail, the tyres 5a‴ʺʺ and 5b‴ʺʺ are spaced from each other parallel to the rotational axis A (Figure 5B).

In more detail, the rim **4‴ʺʺ** comprises:
- a radially external surface 4a‴ʺʺ extending along the entire circumference of the rim 4‴ʺʺ itself with respect to the rotational axis A and around which the tyres 5a‴ʺʺ and 5b‴ʺʺ are fitted; and
- a portion 4b‴ʺʺ, which is transverse to the surface 4a‴ʺʺ and is radially internal to the surface 4a‴ʺʺ with respect to the rotational axis A.

The portion 4b‴ʺ‴ faces outward of the motor vehicle 1‴ʺʺ (i.e., on the side facing away from the other wheel 3ʺ‴‴ aligned along the direction Y).

Specifically, the surface 4a‴ʺʺ comprises a portion 40ʺʺ‴ , at which the tyre 5a‴ʺʺ is fitted, and a portion 41‴‴ʺ, at which the tyre 5b‴ʺʺ is fitted.

Advantageously, the volume 7a‴ʺʺ of the tyre 5a‴ʺʺ is fluidly connected to the volume 7b‴ʺʺ of the tyre 5b‴ʺʺ. Consequently, the volume 7b‴ʺʺ is to be understood as a further volume 8‴ʺʺ for the tyre 5a‴ʺʺ and the volume 7a‴ʺ‴ is to be understood as a further volume 8‴‴ʺ for the tyre 5b‴ʺʺ.

In more detail, the motor vehicle 1‴ʺʺ comprises:
- a fluidic line 20‴ʺʺ which fluidly connects the volumes 7a‴ʺʺ and 7b‴ʺʺ; and
- valve means 22‴ʺʺ arranged at the fluidic line 20‴ʺʺ and adapted to selectively deny the fluidic communication between the volume 7a‴ʺʺ and the volume 7b‴‴ʺ.

In further detail, the valve means **22‴ʺʺ** comprise a solenoid valve.

Preferably, the motor vehicle 1‴ʺʺ comprises an electronic control unit **70‴ʺʺ** operatively connected to the valve means 22‴‴ʺ .

The electronic control unit **70‴ʺʺ** is configured to command the valve means 22‴ʺʺ to deny or allow the fluidic communication between the volumes 7a‴ʺʺ and 7b‴ʺʺ as a function of a control criterion.

In detail, the control criterion provides that one or more parameters (e.g., speed, acceleration, steering angle, driving torque, the vertical loads Fᵥ and/or tyre pressure 5a‴ʺʺ, 5b‴ʺʺ, etc.) of the dynamics of the motor vehicle 1‴ʺʺ are less than or greater than a threshold value.

For example, the electronic control unit 70‴ʺʺ is configured to deny the fluidic communication between the volumes 7a‴ʺʺ and 7b‴‴ʺ when the rolling resistance of the tyres 5a‴ʺʺ and/or 5b‴ʺʺ is less than or greater than a desired value.

Alternatively or in addition, the electronic control unit **70‴ʺʺ** is configured to command the valve means 22‴‴ to deny the fluidic communication between the volumes 7a‴ʺʺ and 7b‴‴ʺ in the event of a puncture of one of the tyres 5a‴‴ʺ 5b‴ʺʺ .

In particular, the motor vehicle 1‴ʺʺ comprises four wheels 3‴ʺʺ. Alternatively, the motor vehicle 1‴ʺʺ comprises only two wheels 3‴ʺʺ, for example both arranged on the side of the rear portion of the motor vehicle 1‴ʺʺ .

From the foregoing, the advantages according to the invention are evident.

Since the motor vehicle 1; 1'; 1"; 1‴; 1ʺʺ; 1‴ʺ; 1‴‴; 1‴ʺʺ comprises the volume 8; 8a'', 8b''; 8‴; 8ʺ‴; 8‴‴; 8‴ʺʺ, which is fluidly connected to the volume 7; 7a‴ʺʺ 7b‴ʺʺ, it is possible to vary the rolling resistance of the tyres easily and safely, so that the latter adapts to the different driving conditions.

Moreover, the inflation pressure of the tyres of the motor vehicle 1; 1'; 1‴; 1ʺʺ; 1‴ʺ; 1‴‴; 1‴ʺʺ is adjusted without resorting to compressors, which would have a significant impact on the layout and weight of the motor vehicle 1; 1'; 1‴; 1ʺʺ; 1ʺ‴; 1‴‴; 1‴ʺʺ.

Since the motor vehicle 1'' comprises the volumes 8a'' and 8b'', which contain gas under pressure and can be placed in fluidic communication with the respective fluidic lines 20 and 21, it is possible to quickly and if necessary increase the pressure of the gas contained in the volumes 7 of the wheels 3a, 3b, 3c, 3d.

Since the suspensions 10‴; 10ʺʺ comprise the gas spring 11‴; 11ʺʺ, which is fluidly connected to the wheel 3‴; 3ʺʺ, the variations in inflation pressure of the tyres 5 can be conveniently exploited to vary the stiffness of the suspensions 10‴; 10ʺʺ.

Since the tyres 5a‴‴ and 5b‴ʺʺ are mounted on the same rim 4‴ʺʺ, they rotate at the same angular speed around the respective rotational axis A. This allows the tyres 5a‴ʺʺ and 5b‴ʺʺ to be fluidly connected to each other in a very simple way.

Since the motor vehicle 1'; 1"; 1ʺʺ; 1‴‴; 1‴ʺʺ comprises the valve means 22', 23'; 22'', 23"; 22ʺʺ; 22‴‴; 22‴ʺʺ, which are electronically controlled as a function of one or more control criteria, it is possible to vary the rolling resistance of the tyres extremely quickly and accurately.

Finally, it is clear that modifications and variants can be made to the motor vehicle 1; 1'; 1"; 1‴; 1ʺʺ; 1‴ʺ; 1‴‴; 1‴ʺʺ according to the invention which, however, do not fall outside the scope of protection defined by the claims.

The motor vehicle could comprise some or all of the following:
- one or more volumes 8;
- one or more volumes 8a", 8b" ;
- one or more volumes 8‴, 8ʺʺ;
- one or more volumes 8ʺ‴, 8‴‴;
- one or more volumes 8‴ʺʺ.

The volume 7 of the wheel 3a could be fluidly connected to the volume 7 of the wheel 3d and the volume 7 of the wheel 3b could be fluidly connected to the volume of the wheel 3c. Alternatively, the volume 7 of the wheel 3a could be fluidly connected to the volume 7 of the wheel 3b and the volume 7 of the wheel 3c could be fluidly connected to the volume 7 of the wheel 3d. Still alternatively, the volumes 7 of all the wheels 3a, 3b, 3c, 3d could be fluidly connected to each other.

The deformable aerodynamic device 13‴ʺ; 13‴‴ could be a rear wing or a side skirt.

Finally, although it has been indicated above that all the wheels 3 are identical to each other and that all the wheels **3‴ʺʺ** are identical to each other, the wheels 3 and/or the wheels 3ʺʺ‴ could be different from each other. For example, the wheels 3; 3‴‴ could differ from each other in geometric and/or dimensional aspects. Specifically, the wheels arranged on the side of the rear portion 1b could have a greater width than the wheels arranged on the side of the front portion 1a parallel to the direction X. Similar considerations also apply to the wheels 3‴; 3ʺʺ; 3‴ʺ; 3‴‴.

## Claims

1. Motor vehicle (1; 1'; 1" ; 1‴; 1ʺʺ; 1‴ʺ; 1‴‴; 1‴ʺʺ) comprising:
- a frame (2);
- a plurality of wheels (3; 3‴; 3ʺʺ; 3‴ʺ; 3‴‴; 3‴ʺʺ) rotatable relative to said frame (2) about respective rotational axes (A);
each said wheel (3; 3‴; 3ʺʺ; 3‴ʺ; 3‴‴ 3‴ʺʺ) comprising:
- a rim (4; 4‴ʺʺ) arranged concentrically to the respective said rotational axis (A); and
- at least one pneumatic tyre (5; 5a‴ʺʺ, 5b‴ʺʺ) fitted around said rim (4; 4‴ʺʺ);
said pneumatic tyre (5; 5a"""', 5b‴ʺʺ) comprising, in turn:
- a radially external surface (6; 6a, 6b‴ʺʺ) with respect to the respective said rotational axis (A); and
- a volume (7; 7‴; 7ʺʺ; 7‴ʺ; 7‴‴; 7a‴ʺʺ, 7b‴ʺʺ) interposed between said radially external surface (6; 6a‴ʺʺ, 6b‴ʺʺ) and said rim (4; 4‴ʺʺ) radially with respect to said rotational axis (A);
**characterized in that** it comprises at least one further volume (8; 8a'', 8b"; 8‴; 8""; 8‴ʺ; 8‴‴; 8‴ʺʺ), which is fluidly connected to said volume (7; 7‴; 7ʺʺ; 7‴ʺ; 7‴‴; 7a‴ʺʺ, 7b‴ʺʺ) of at least one said wheel (3; 3"; 3‴; 3ʺʺ; 3‴ʺ; 3‴‴; 3‴ʺʺ).

2. Motor vehicle according to claim 1, comprising a first said wheel (3a, 3b; 3c, 3d) and a second said wheel (3c, 3d; 3a, 3b);
wherein one said further volume (8) is the volume (7) of said second wheel (3c, 3d; 3a, 3b); said volume (7) of said second wheel (3c, 3d; 3a, 3b) being fluidly connected to said volume (7) of said first wheel (3a, 3b; 3c, 3d).

3. Motor vehicle according to claim 2, comprising a front portion (1a; 1a'; 1a" ) and a rear portion (1b; 1b'; 1b") with respect to an advancement direction (V);
wherein one of said first wheel (3a, 3b; 3c, 3d) and said second wheel (3c, 3d; 3a, 3b) is arranged on the side of said front portion (1a; 1a' ; 1a") and the other one of said first wheel (3a, 3b; 3c, 3d) and said second wheel (3c, 3d; 3a, 3b) is arranged on the side of said rear portion (1b; 1b'; 1b").

4. Motor vehicle according to claim 3, comprising a left lateral portion (1c; 1c'; 1c") and a right lateral portion (1d; 1d'; 1d'') with respect to said advancement direction (V);
wherein one (3a, 3d) of said first wheel and said second wheel is arranged on the side of said left lateral portion (1c; 1c'; 1c") and the other one (3b, 3c) of said first wheel and said second wheel is arranged on the side of said right lateral portion (1d; 1d'; 1d").

5. Motor vehicle according to any one of claims 2 to 4, comprising:
- valve means (22', 23') configured to selectively deny the fluidic communication between said volume (7) of said first wheel (3a, 3b; 3c, 3d) and said volume (7) of said second wheel (3c, 3d; 3a, 3b);
- an electronic control unit (70') operatively connected to said valve means (22', 23');
said electronic control unit (70') being configured to command said valve means (22', 23') to deny or allow the fluidic communication between said volume (7) of said first wheel (3a, 3b; 3c, 3d) and said volume (7) of said second wheel (3c, 3d; 3a, 3b) as a function of a control criterion.

6. Motor vehicle according to any one of claims 1 to 4, comprising a tank (9"), which is integral to said frame (2);
wherein said tank (9") comprises a said further volume (8a", 8b").

7. Motor vehicle according to claim 6, comprising a fluidic line (20, 21), which fluidically connects said volume (7) of said first wheel (3a, 3b; 3c, 3d) to said volume (7) of said second wheel (3c, 3d; 3a, 3b);
said further volume (8a", 8b") being fluidly connected to said fluidic line (20, 21);
said motor vehicle (1") further comprising:
- valve means (22", 23") configured to selectively deny the fluidic communication between said further volume (8a", 8b") and said fluidic line (20, 21);
- a compressor (60", 61"), which is fluidly connected to said further volume (8a", 8b") and is configured to deliver a gas under pressure to said further volume (8a", 8b"); and
- an electronic control unit (70") operatively connected to said valve means (22", 23") and said compressor (60", 61");
said electronic control unit (70") being configured to:
- command said valve means (22", 23") to deny the fluidic communication between said further volume (8a", 8b") and said fluidic line (20, 21);
- command said compressor (60'', 61'') to deliver gas under pressure to said further volume (8a", 8b") until a pressure inside said further volume (8a", 8b'') complies with a control criterion.

8. Motor vehicle according to any one of the preceding claims, comprising a plurality of suspensions (10‴; 10ʺʺ), which operatively connect said frame (2) to said wheels (3‴; 3ʺʺ) at variable relative distances;
wherein each said suspension (10‴; 10ʺʺ) comprises at least one gas spring (11‴; 11‴ʺ);
wherein said gas spring (11‴; 11ʺʺ) comprises a said further volume (8‴; 8ʺʺ) .

9. Motor vehicle according to any one of the preceding claims, comprising a bodywork (12‴ʺ; 12‴‴) operatively connected to said frame (2);
said bodywork (12ʺ‴; 12‴‴) comprising at least one aerodynamic deformable device (13‴ʺ; 13‴‴); said aerodynamic deformable device (13ʺ‴; 13‴‴) comprising a said further volume (8‴ʺ; 8‴‴) , which is inflatable; said aerodynamic deformable device (13ʺ‴; 13‴‴) being adapted to deform as a function of the inflation of said further volume (8‴ʺ; 8‴‴) .

10. Motor vehicle according to claim 8 or 9, comprising:
- valve means (22ʺʺ; 22‴‴) configured to selectively deny the fluidic communication between said volume (7ʺʺ; 7‴‴) and said further volume (8ʺʺ; 8‴‴);
- an electronic control unit (70ʺʺ; 70‴‴) operatively connected to said valve means (22ʺʺ; 22‴‴) and configured to command the valve means (22ʺʺ; 22‴‴) to allow or deny the fluidic communication between said volume (7ʺʺ; 7‴‴) and said further volume (8ʺʺ; 8‴‴);
said electronic control unit (70ʺʺ; 70‴‴) being configured to command said valve means (22ʺʺ; 22‴‴) to deny or allow the fluidic communication between said volume (7ʺʺ; 7‴‴) and said further volume (8ʺʺ; 8‴‴) as a function of a control criterion.

11. Motor vehicle according to any one of the preceding claims, wherein at least one said wheel (3‴ʺʺ) comprises:
- one said rim (4‴ʺʺ); and
- at least one first said pneumatic tyre (5a‴ʺʺ) and a second said pneumatic tyre (5b‴ʺʺ) fitted around said rim (4‴ʺʺ) ;
said first and second pneumatic tyres (5a‴ʺʺ, 5b‴ʺʺ) being adjacent to each other parallel to the rotational axis (A) of said wheel (3‴ʺʺ);
wherein the volume (7b‴ʺʺ) of said second pneumatic tyre (5b‴ʺʺ) is a said further volume (8‴ʺʺ); said volume (7b‴ʺʺ) of said second pneumatic tyre (5bʺʺ being fluidly connected to said volume (7a‴ʺʺ) of said first pneumatic tyre (5a‴ʺʺ).

12. Motor vehicle according to claim 11, comprising:
- a fluidic line (20‴ʺʺ), which fluidly connects the volume (7a‴ʺʺ) of said first pneumatic tyre (5a‴ʺʺ) to the volume (7b‴ʺʺ) of said second pneumatic tyre (5b‴ʺʺ); and
- valve means (22‴ʺʺ) arranged at said fluidic line (20‴ʺʺ) and adapted to selectively deny the fluidic communication between the volume (7a‴ʺʺ) of said first pneumatic tyre (5a‴ʺʺ) and the volume (7b‴ʺʺ) of said second pneumatic tyre (5b‴ʺʺ);
- an electronic control unit (70‴ʺʺ), which is operatively connected to said valve means (22‴‴);
said electronic control unit (70‴ʺʺ) being configured to command said valve means (22‴ʺʺ) to deny or allow the fluidic communication between the volume (7a‴ʺʺ) of said first pneumatic tyre (5a‴ʺʺ) and the volume (7b‴ʺʺ) of said second pneumatic tyre (5b‴ʺʺ) as a function of a control criterion.

13. A method for adjusting the inflation pressure of at least one tyre (5; 5a‴ʺʺ, 5b‴ʺʺ) of a motor vehicle (1; 1'; 1"; 1‴; 1ʺʺ; 1‴ʺ; 1‴‴; 1‴ʺʺ); said motor vehicle (1; 1'; 1"; 1‴; 1ʺʺ; 1‴ʺ, 1‴‴; 1‴ʺʺ) comprising:
- a frame (2);
- a plurality of wheels (3; 3‴; 3ʺʺ; 3‴ʺ; 3‴‴; 3‴ʺʺ) rotatable relative to said frame (2) about respective rotational axes (A);
each said wheel (3; 3‴; 3ʺʺ; 3‴ʺ; 3‴‴ 3‴ʺʺ) comprising:
- a rim (4; 4‴ʺʺ) arranged concentrically to the respective said rotational axis (A); and
- a said pneumatic tyre (5; 5a‴ʺʺ, 5bʺ‴ʺ) fitted around said rim (4; 4‴ʺʺ);
said pneumatic tyre (5; 5a‴ʺʺ, 5b‴ʺʺ) comprising, in turn:
- a radially external surface (6; 6a‴ʺʺ, 6b‴ʺʺ) with respect to the respective said rotational axis (A); and
- a volume (7; 7‴; 7ʺʺ; 7‴ʺ; 7‴‴; 7a‴ʺʺ, 7b‴ʺʺ) interposed between said radially external surface (6; 6a‴ʺʺ, 6b‴ʺʺ) and said rim (4; 4‴ʺʺ) radially with respect to said rotational axis (A);
said method being **characterized in that** it comprises the step i) of fluidly connecting at least one further volume (8; 8a", 8b"; 8‴; 8""; 8‴ʺ; 8‴‴; 8‴ʺʺ), to said volume (7; 7‴; 7ʺʺ; 7‴ʺ; 7‴‴; 7a‴ʺʺ, 7b‴ʺʺ) of at least one said wheel (3; 3"; 3‴; 3ʺʺ; 3‴ʺ'; 3‴‴; 3‴ʺʺ).

14. Method according to claim 13, wherein said motor vehicle (1‴; 1ʺʺ) comprises a plurality of suspensions (10‴; 10ʺʺ), which operatively connect said frame (2) to said wheels (3‴; 3ʺʺ) at variable relative distances;
wherein each said suspension (10‴; 10ʺʺ) comprises at least one gas spring (11‴; 11‴ʺ);
wherein said gas spring (11‴; 11ʺʺ) comprises a said further volume (8‴; 8ʺʺ) ;
said method comprising the step ii) of sending gas from said volume (7‴; 7ʺʺ) to said further volume (8‴; 8ʺʺ) and vice versa.

15. Method according to claim 14, comprising the further step iii) of selectively deny said step ii) as a function of a control criterion by means of valve means (22ʺʺ) of said motor vehicle (1ʺʺ);
said valve means (22ʺʺ) being configured to selectively deny the fluidic communication between said volume (7ʺʺ) and said further volume (8ʺʺ).
